# EUROPEAN PATENT APPLICATION

(11) **EP 0 918 192 A1**
(43) Date of publication of application: **26.05.1999**
(21) Application number: 97120443.3
(22) Date of filing: 21.11.1997
(51) Int. Cl.: F23G 5/16, F23G 7/06, F23G 5/00, F23L 7/00, F23G 5/44, F23G 5/46

(54) **A method of disposal of waste materials**

(71) Applicant: Quilldale Investments Limited, Douglas, Isle of Man (GB)
(72) Inventor: Amadesi, Paolo, Bologna (IT)
(74) Representative: Righetti, Giuseppe

(57) **Abstract**

Waste materials, even if they are weakly combustible, are treated in a closed oxidation chamber (2) containing high-pressure pure oxygen, in the presence of which an oxidation reaction is triggered that gives rise to development of temperatures in the range of 2200°C and consequent pyrolysis of the material components. The temperature in the oxidation chamber (2) is limited, if necessary, by injection of water thereinto. The gaseous products coming out of the oxidation chamber (2) are cooled to about 500°C and afterwards they are caused to react with an oxidized copper element (52) to be subjected to an additional oxidation step. The gaseous products are subjected to further cooling to be then discharged to the atmosphere, upon condensation of the water present therein which is sent back to the oxidation chamber (2). Heat subtracted from the gaseous products is utilized to generate electric energy, whereas the individual components subjected to pyrolysis are collected by fractional condensation.

## Description

The present invention relates to a method of disposal of waste materials of the type comprising the steps of: introducing the material to be disposed of into an oxidation chamber supplied with oxygen at a molar concentration greater than 90% and a pressure included between 3 MPa and 5 MPa, so that the compounds and elements contained in the treated material are oxidized and also subjected to pyrolysis and sublimated by effect of heat produced by the oxidation reaction; cooling the gaseous products resulting from sublimation of the components subjected to pyrolysis and the oxides produced in the oxidation reaction; discharging the residual gaseous products to the atmopshere after cooling.

This method is carried into practice by a plant for disposal of waste materials, of the type comprising an oxidation chamber which is substantially closed to the external environment; loading means associated with the oxidation chamber to introduce the material to be disposed of thereinto; primary feeding means to send oxygen of a molar concentration greater than 90% and a pressure included between 3 MPa and 5 MPa to the oxidation chamber, so that the compounds and elements contained in the material introduced into the oxidation chamber are oxidized and also submitted to pyrolysis and sublimated by effect of heat produced by the oxidation reaction; cooling means operating downstream of the oxidation chamber to cool the gaseous products resulting from sublimation of the components subjected to pyrolysis and the oxides produced in the oxidation reaction; and exhaust means to discharge the residual gaseous products to the atmosphere after cooling.

It is known that one of the main methods adopted for disposal of waste materials such as solid town trash, industrial waste, noxious toxic waste and the like, essentially involves incinerating of same within appropriate furnaces where a combustion reaction takes place between the treated material and the atmopsheric-pressure combustive air from the external environment.

The incineration efficiency represented by several different factors such as the percent volume of the residual material from incineration, the amount of breaking down of the bacterial charge, the qualitative and quantitative features of the polluting substances in the gases developed from combustion, is closely connected with the average combustion temperature generated within the furnace.

In present incinerators intended for treatment of solid town trash and/or waste comparable to said town trash, the average incineration temperature is in the range of approximately 950°-1050°C, depending on the requirements of the regulations in force.

It should be pointed out that in most cases maintaining these operating temperatures in the furnace requires supplying said furnace with high quality fuel in order to make up for the low calorific value of the treated material.

In incineration furnaces intended for disposal of toxic and/or noxious waste materials or in any case materials containing PVC to an extent greater than 20%, the value of the average incineration temperature dictated by the regulations in force is about 1200°C. Achievement of these temperature values imposes particular technical expedients to be adopted, such as the use of auxiliary burners and pre-heating of air, in addition to an important supply of high quality fuel in order to promote combustion.

For the purpose of promoting a combustion of the treated-material components which is as much as possible complete and homogeneous, present incinerators must also be equipped with a post-combustion chamber in which fumes produced from combustion are caused to flow under a turbulence condition to promote combustion of the suspended unburnt substances.

It should be noted however, that the incineration process carried out in actually available furnaces gives rise in any case to an inportant amount of residual ashes often in the order of 30%-40% with respect to the overall mass of the material introduced into the combustion chamber. In addition, combustion develops many polluting and/or harmful emissions, such as dusts, heavy metals, aromatic polycyclic hydrocarbons, chlorinated polycyclic compounds (dioxins and furans), haloid acids, cyanides, phosphorus, SOx and Nox. For each of these emissions particular measures are to be adopted, such as the use of breaking-down, filtering and/or neutralization processes that have a prevailing incidence on the installation and management cost of the whole incineration plant On the other hand, in spite of the great number of precautionary measures adopted, present combustion processes often give rise to formation of cyclic chlorinated gas chains and NOx chains that cannot be broken down and are highly polluting.

In addition, energy regeneration obtainable from present incineration processes is relatively small in that usually it does not exceed values in the order of 250 KW/h per ton of treated waste product.

Due to all the above problems, in many cases one is lead to prefer carrying out discarding of waste materials into dumps, instead of utilizing the incineration process, which will give rise to serious implications in terms of town planning and environmental policy.

In order to overcome these problems, plants have been proposed, of the type described in the Italian Patent for industrial invention No. 1246381 for example, which essentially comprise an oxidation chamber to the inside of which, upon introduction of the material to be treated and sealing of the chamber, pure oxygen is admitted, or in any case oxygen of a very high molar concentration and high pressure, included between 3 and 5 MPa, for example. Under these conditions, an oxidation reaction with the material is triggered which will give rise to a great heat generation and therefore a rise in temperature to values greatly higher than these achieved in traditional incinerators.

The high temperature gives rise to sublimation of the material components and pyrolisys or thermal decomposition of the individual substances.

Once the oxidation reaction has been completed, the sublimated vapours are allowed to expand and the individual substances subjected to pyrolysis can be recovered by fractional condensation so that atmospheric pollution is greatly reduced as compared with the most traditional incineration systems.

In addition, the attainable high temperatures within the oxidation chamber enable an important reduction in the residual ash percentages of the oxidation process, and make it possible to decompose also substances that cannot be treated in common incinerators such as amianthus for example, which on the other hand have a very high degree of toxicity and danger.

This type of plant too has proved to be capable of being improved.

It has been in fact ascertained that, due to the high process temperatures, the oxidation reaction gives rise to the formation of oxides exclusively in the form in which the bond between the oxidized element and oxygen is sufficiently strong so as to endure high process temperatures. Unfortunately, among these "strong" oxides there is also carbon monoxide which is very toxic and can be hardly neutralized with the systems presently in use.

Another problem found is due to the fact that, except for treatment of amianthus or in any case materials having a very low calorific value or even a value corresponding to zero, temperatures within the oxidation chamber would tend to rise far beyond 2200°C which, at the present state of the art, represents a limit that must not be overcome if one wants to avoid damaging of the refractory material lining the oxidation chamber.

In order to conveniently maintain the process temperature within appropriate limits it is therefore necessary that particular precautionary measures should be adopted, such as feeding oxygen in a lower amount than the stoichiometric amount, dissipating heat through the oxidation chamber walls, and conducting the oxidation process in a discontinuous manner on predetermined material batches. All these expedients promote reduction in the thermal and productive yield of the process.

It is a main object of the present invention to solve the problems of the known art by providing a method and a plant in which neutralization and/or breaking down of any polluting substances produced by the oxidation process or the subsequent treatment of the gaseous products originating therefrom is achieved.

Another object of the invention is to achieve the highest thermal yield from the oxidation reaction, independently of the type of the treated material, without the temperatures in the oxidation chamber exceeding predetermined values, so that it is possible to arrange the plant for a continuous operation tending to increase productivity, while at the same time achieving the maximum amount of thermal energy made available from the material oxidation.

The foregoing and further objects that will become more apparent in the course of the present description are substantially achieved by a method of disposal of waste materials, characterized in that the residual gaseous products after a first cooling step, before their being discharged to the atmosphere, are submitted to an additional oxidation step making them react with at least one oxidized metallic element.

Still in accordance with the present invention, this method is put into practice by a plant characterized in that it further comprises at least one post-oxidation chamber containing an oxidized metallic element the surface of which are slightly touched by said gaseous products in order to cause an additional oxidation of the gaseous products themselves.

Further features and advantages will become more apparent from the detailed description of a preferred embodiment of a plant for disposal of waste materials, and the method put into practice by said plant in accordance with the present invention, which description is taken hereinafter, by way of non-limiting example, with reference to the accompanying drawings, in which:
- Fig. 1 is a general diagrammatic view of the plant in accordance with the invention;
- Fig. 2 shows the loading unit associated with the oxidation chamber, sectioned according to a diametrical orthogonal plane with respect to Fig. 1.

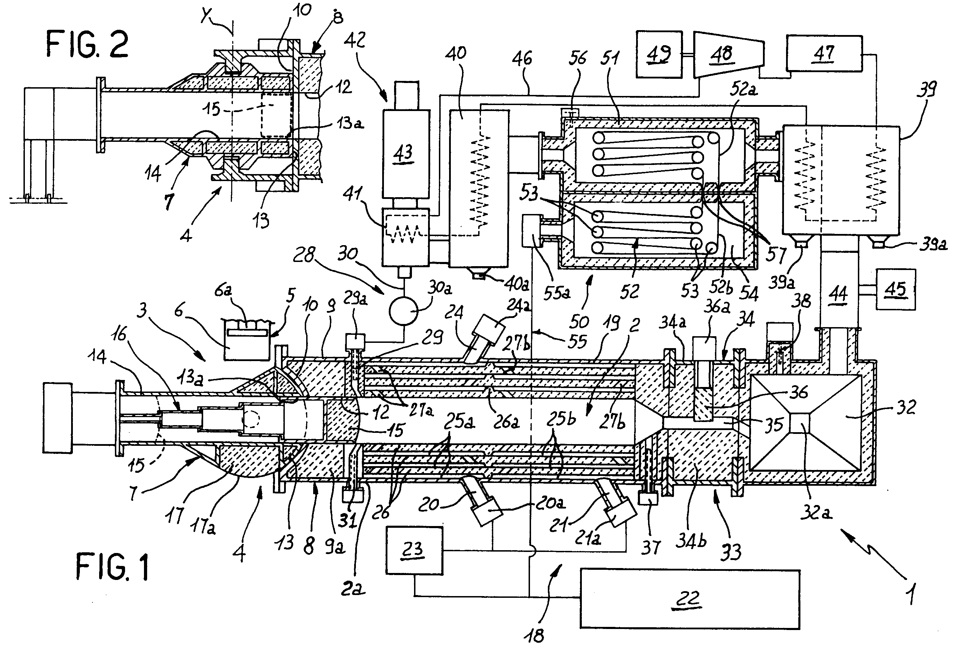

Referring particularly to Fig. 1, a plant for disposal of waste materials designed to put into practice the disposing method according to the present invention has been generally identified by reference numeral 1.

Plant 1 comprises at least one oxidation chamber 1 into which the material to be disposed of is introduced by loading means generally identified by 3.

The loading means 3 essentially comprises a loading valve unit 4 connected to one end 2a of the oxidation chamber 2 and a thrust group 5 intended for sending the material to be disposed of, according to requirements, to the loading valve unit 4. The material can be fed in bulk although in a preferential solution it is provided that it should be first ground and compacted until a density of about 1000 Kg/m³, and packaged into cylindrical envelopes of heat-shrinkable plastic material of appropriate sizes.

The packaged material in the form of cylinders is fed to a thrust group 5 through a hopper (not shown) connected to a chute 6 on which a pusher 6a operates, which pusher is reciprocated by a fluid-operated actuator to cause introduction of the material into the loading unit 4.

The loading valve unit 4 essentially comprises a valve body 7 operatively connected to the first end 2a of the oxidation chamber 2. In more detail, the valve body 7 is pivotally mounted to a fixed body 8 integral with the oxidation chamber 2, being allowed to oscillate about a vertical axis Y (Fig. 2). The fixed body 8 has an external jacket 9 of metallic material containing an inner filling of refractory material 9a and defining, on its side facing the valve body 7, a locating surface 10 of substantially cylindrical extension concentric with the rotation axis Y of the valve body. The whole fixed body 8 is coaxially passed through by a through hole defining an access opening 12 to the oxidation chamber 2.

The valve body 7 in turn has a cylindrical sealing surface 13 coaxial with the rotation axis Y and opposed to the locating surface 10 of the fixed body 8. One or more sealing elements, not shown in the drawing and consisting of concentric steel rings for example, that are housed in respective grooves formed in the locating surface 10 in coaxial relation with the access opening 12, ensure a hermetic seal between the fixed body 8 and valve body 7.

Defined in the sealing surface 13 is a loading opening 13a connected to a tubular loading element 14 slidably and sealingly housing a closure member 15 of refractory material. The closure member 15 is movable upon command of a fluid-operated actuator 16 (not shown in Fig. 2), preferably of the telescopic type, to be selectively moved between a sealing position in which, as shown in fig. 1, it projects from the loading opening 13a towards the oxidation chamber 2 to sealingly and thermally insulate said chamber from the valve body 7, and a loading position, shown in chain line in Fig. 1, in which it is disposed backwardly of the loading opening itself towards the inside of the valve body 7, so as to free the inner space of the tubular loading element 14 to enable introduction of the material to be treated. Defined between said sealing and loading positions of the closure member 15 is an intermediate halt position in which, as shown in chain line in Fig. 2, the closure member is disposed flush with the loading and access openings, 13a and 12 respectively, to enable rotation of the valve body 7 about axis Y without involving admission of gas or vapour under pressure to the tubular loading element 14 and/or important pressure variations internally of the oxidation chamber 2.

Upon command of an actuator not shown, the valve body 7 is movable between a closing position in which, as shown in Fig. 1, it has its loading opening 13a in alignment with the end of the oxidation chamber 2 through the access opening 12, and an opening position, rotated through 90° relative to the closing position, in which the loading opening 13a is turned externally of the oxidation chamber 2 so as to enable the thrust group 5 to introduce the material to be treated into the loading pipe 14, upon backward movement of the closure member 15 to the loading position.

The valve body 7 further has a shielding portion 17 of refractory material, provided with an external surface 17a extending in a continuity relationship with the sealing surface 13. This shielding portion 17 is adapted to be brought before the access opening 12 to close the oxidation chamber 2 when the valve body 7 is at the opening position.

Once introduction of the material into the loading pipe 14 has occurred, the valve body 7 is brought back to the closing position and afterwards the closure member 15 is translated to the sealing position to push the material to the inside of the oxidation chamber 2. The closure member 15 will be then brought back to the intermediate position to enable the subsequent opening of the valve unit 4 for the purpose of loading a new material package.

The oxidation chamber 2 has an external steel skirt 19 of substantially cylindrical shape having one end connected to the external jacket 9 of the fixed boy 8 by flanges or equivalent fastening means.

The skirt 19 is externally provided with one or more inlet pipes 20, 21 being part of primary feeding means 18 for admission of oxygen to the oxidation chamber 2. In more detail, the presence of a first and a second series of primary inlet pipes 20, 21 is provided which are respectively spaced apart on the longitudinal extension of the skirt 19. Admission of oxygen through the inlet pipes 20, 21 takes place by means of appropriate powered valves 20a, 21a for flow rate adjustment, only diagrammatically shown as known in themselves, operation of which is managed in such a way that the oxygen admission takes place in a stoichiometrically provided amount with respect to the treated material and possible other substances contained in the oxidation chamber 2. To this end, valves 20a, 21a are driven by a programmable electronic control unit, also not shown, that oversees operation of all components in plant 1.

Oxygen reaches the respective adjustment valves 20a, 21a through a molecular sieve 22 and a compressor 23. Alternatively, the feeding means 18, only diagrammatically shown and not further described as known, can provide for the use of containers holding gasificating liquid cryogenic oxygen under pressure or any other means capable of feeding oxygen to a pure state or in any case to a molar concentration higher than 90%, and a high pressure included between 3 and 5 MPa, for example.

In the presence of the stoichiometrically provided amount of high-pressure pure or substantially pure oxygen, an oxidation reaction of the material to be treated, introduced into the oxidation chamber 2, is efficiently developed and self-propagated, by an important temperature rise within the chamber itself, until values in the range of 2200°C, and in any case much higher than the values reachable in the present incinerators. The high temperature promotes the complete pyrolysis and sublimation of the compounds and elements contained in the treated material. The mass of the treated material is therefore almost completely converted to gaseous products, so that the mass of the residual useless ashes after oxidation does not exceed 1% of the overall mass of the treated material, if the latter is of an organic type, and 5% if the material is of a different type.

In addition, at least one auxiliary nozzle 24 is disposed on the skirt 19; said nozzle is provided with a corresponding flow-rate-adjusting valve 24a for admission of auxiliary fuel such as methane for example, coming from respective bottles or equivalent auxiliary feeding means.

Feeding of methane is carried out not only during the starting step of the plant, but also during treatment of weakly combustible or not at all combustible materials, such as amianthus for example, or at all events having a very low calorific value that does not enable reaching of the optimal operative temperature by the only oxidation of the material itself. When methane is injected into the oxidation chamber 2, feeding of oxygen is adjusted in a stoichiometric amount in connection both with the treated material and the admitted methane amount.

Advantageously, oxygen and methane, if any, from the primary inlet pipes 20, 21 and auxiliary nozzle 24, before reaching the oxidation chamber 2, are pre-heated through a heat-exchange step carried out with the oxidation chamber walls. In more detail, for the purpose it is provided that in the oxidation chamber 2 walls, one or more heat-exchange hollow spaces or gaps 25a, 25b be formed, which gaps communicate with the inner cavity of the oxidation chamber 2 and are preferably each formed between at least two tubular elements coaxially fitted into each other. More particularly, in a preferential solution three concentric tubular elements 26 of refractory material are provided inside the skirt 19, and they are each provided with three or more circumferentially-distributed longitudinal ribs (not shown in the figure), adapted to define the gaps 25a, 25b, keeping the tubular elements 26 suitably spaced apart from each other and from the external skirt 19. In addition, the refractory tubular elements 26 are preferably provided with circumferential beads 26a so that, due to their presence, said gaps are divided into a first series 25a and a second series 25b.

The first gap series 25a is supplied from the first series of primary inlet pipes 20, as well as from the auxiliary nozzle/nozzles 24, whereas the second gap series 25b is supplied from the second series of primary inlet pipes 21.

The gaps 25a, 25b of each series communicate with each other through first and second radial slits 27a, 27b mutually offset according to an alternate sequences along the longitudinal extension of the respective tubular elements 26.

As can be viewed from Fig. 1, the first radial slits 27a provided in the innermost refractory tubular element open into the inner cavity of the oxidation chamber 2 close to the first end of said chamber, adjacent to the loading valve unit 4, so that oxygen from the first primary inlet pipes 20 is admitted to the chamber close to said end. The second radial slits 27b arranged on the innermost refractory tubular element 26 are in turn located at an intermediate point of the longitudinal extension of said element so that oxygen from the second primary inlet pipes 21 converges at an intermediate point along the oxidation chamber 2 extension.

This solution aids in improving the oxygen distribution in the oxidation chamber 2, because in said chamber two areas are delimited in which, if desired, oxidation can take place in a differentiated manner.

It should be also noted that the above described solution enables an easy replacement of the individual tubular elements 26 of refractory material, by merely making them slip off from each other.

In accordance with a further feature of the present invention, also converging at the oxidation chamber 2 is water supply means 28 for controlled admission of water to the chamber itself.

This water supply means 28 can be used when materials having a relatively high calorific value, for example higher than 4500 KJ/kg are to be treated, in order that, due to the absorbed heat as a result of the molecular decomposition of water, the inner temperature of the oxidation chamber 2 may be maintained within predetermined levels, usually in the order of 2200°C, for the purpose of preventing damages to the tubular elements 26 and the other refractory insulating elements.

This water supply means 28 preferably comprises at least one injection nozzle 29 opening close to the first end 2a of the oxidation chamber 2 and interlocked to a corresponding flow rate adjusting valve 29a connected to a water supply duct 30 fed by a pump 30a.

Advantageously, when the water supply means 28 is used, admission of oxygen through the primary feeding means 18 is preferably adjusted in a stoichiometric amount with respect to the treated material, the amount of oxygen brought in by the water admitted through nozzle 29 being deduced from said stoichiometric amount. In conclusion, the sum of the oxygen amount brought in by the primary feeding means 18 and by water respectively represents the necessary amount for achieving an optimal oxidation of the treated material.

In a manner known per se, one or more ignition electrodes 31 can be arranged close to the first end 2a of the oxidation chamber 2; said electrodes are operable in case of need to cause starting of the plant 1 and the oxidation reaction.

Activation of electrodes 31 can also be caused automatically at any moment during operation of the plant upon command of the electronic control unit, if for any reason too great a reduction of the reaction rate within the oxidation chamber 2 should occur.

Operating downstream of the oxidation chamber 2 is cooling means intended for being passed through by the gaseous products from the oxidation reaction within the chamber itself, in order to cause an appropriate cooling of same.

In accordance with this cooling means, a suitably insulated expansion chamber 32 is provided to be connected to a second end 2b of the oxidation chamber 2, upon interposition of control valve means 33 adapted to adjust the gaseous product flow rate from the oxidation chamber 2 to the expansion chamber 32 itself.

The control valve means 33 advantageously comprises a second valve body 34 consisting of a tubular union 34a connected, at respectively opposite sides, to the skirt 19 of the oxidation chamber 2 and the expansion chamber 32. The tubular union 34a is provided with a refractory filling 34b passed through by a connecting duct 35 bringing the oxidation chamber 2 into communication with the expansion chamber 32. Slidably guided in the second valve body 34 is a restricting member 36 of refractory material, to be driven by an actuator 36a and optionally by a manual control system, to be selectively positioned in the connecting duct 35 so as to regulate the passage section of the gaseous products to the expansion chamber 32, through the connecting duct. Operation of actuator 36a to regulate positioning of the restricting member 36 is managed by the process computer, based on the data detected by first pressure and/or temperature probes 37 arranged in the second end 2b of the oxidation chamber 2, as well as by second temperature and pressure probes 38 associated with the expansion chamber 32. In greater detail, the automatic intervention of actuator 36a on the restricting member 36 takes place in a manner adapted to maintain an almost constant pressure value, included, by way of example, between 0.1 and 0.8 MPa depending on requirements, in the expansion chamber 32.

The cooling means further comprises a first and a second heat exchanger 39, 40 disposed one after the other downstream of the expansion chamber 32 and arranged to cool the gaseous products until a temperature included, just as an indication, between 400° and 600°C at the exit of the first heat exchanger 39 and corresponding to about 150°C at the exit of the second heat exchanger 40.

Respectively connected with the expansion chamber 32 and heat exchangers 39, 40, are first, second and third collecting drawers 32a, 39a and 40a known per se and conventional, inside which a first fraction of substances to be condensed at a temperature higher than 1000°C, at least one second fraction of substances to be condensed at temperatures included between 400°C and 1000°C, and a third fraction of substances to be condensed at temperatures included between 600°C and 150°C are respectively collected.

Just as an indication, the first fraction of condensed substances in the adiabatic expansion chamber 32 may comprise Cr, Fe, Si, Mn, Co.

The second fraction of condensed substances in the first heat exchanger 39 may in turn comprise Al, Mg, P, Zn, whereas the third condensed fraction in the second heat exchanger 40 may comprise KOH, Pb, NaOH, Sn, S.

Disposed preferably downstream of the second heat exchanger 40 is a condensation exchanger or condenser 41 in which the temperature of the gaseous products goes below 100°C to cause condensation of the water therein present. Condenser 41, the presence of which can also be dispensed with by arranging the second exchanger 40 in such a manner that it can lower temperature below 100°C, is connected to the water supply circuit 30 to supply the injection nozzle 29 with condensed water, when needed.

Vapours and residual gaseous substances at the condenser 41 exit are discharged to the surrounding atmosphere by conventional exhaust means 42, that may also comprise a scrubber 43 that, in a manner known per se, carries out washing up of vapours, acidification of halogens and neutralization of same, as well as breaking down of dusts, if present, ever if not expected.

The method and plant according to the present invention are conceived to advantage in such a manner that they enable the maximum possible exploitation of the thermal energy present in the gaseous products coming out of the oxidation chamber 2. To this end it is preferably provided that a first turbine 39 be operatively interposed between the adiabatic expansion chamber 32 and the first heat exchanger 39, said turbine carrying out a partial enthalpic exploitation of the gaseous products from the expansion chamber 32. The mechanical energy produced by turbine 44 can be utilized to advantage for operation of a first electrical generator 45 in turn arranged to supply the electrical energy necessary to feed pump 30a, compressor 23, the electronic control unit and all other components of the plant to be electrically operated, without being obliged to resort for the purpose to electric energy from the mains.

It is also provided that the first and second heat exchangers 39, 40 as well as condenser 41, be passed through by a feeding circuit 46 of a steam generator 47 interlocked to a second turbine 48. In conclusion, exchangers 39, 40 and condenser 41 carry out, for the purpose of cooling the gaseous products, a heat exchange between said products and a working fluid running in the feeding circuit 46 in counter-current with respect to the gaseous products.

The second turbine 48 is intended for operation of a second electric generator 49 supplying electric energy for sale.

In accordance with the present invention, the residual gaseous products after a first cooling step achieved following their passing through the expansion chamber 32 and first heat exchanger 39, are submitted to an additional oxidation step, which is carried out making the gaseous products react with at least one oxidized metallic element. This additional oxidation reaction enables, on the one hand, the noxious effects of the monoxides present in the gaseous products (in particular CO which is converted to CO₂) to be neutralized. On the other hand, the additional oxidation step enables hydrogen decomposed from oxygen or other elements as a result of pyrolysis phenomena previously occurred in the oxidation chamber 2, to be neutralized. In other words, hydrogen, by its recombination with oxygen, forms water again which will be recovered in condenser 41 to be sent to the injection nozzle 29 if the assistance of the water supply means 28 is provided.

Thus, the risk that hydrogen may recombine with other elements or substances different from oxygen thereby giving origin to noxious and/or polluting compounds is also eliminated.

It is to note that the amount of hydrogen present in the gaseous products at the exit of the first exchanger 39, and consequently the amount of water collected in condenser 41, will vary depending on the amount of water fed by the water supply means 29 and subsequenty decomposed into H₂ and O₂ within the oxidation chamber 2. It is therefore apparent that the plant 1 is capable of operating continuously without requiring an external water supply for operation of the water supply means 28.

The foregoing being state, for a satisfactory achievement of the additional oxidation step, the latter should be preferably conducted at an average temperature included between 500 and 650°C. Lower average temperature values than the above range could cause difficulties in combining oxygen with monoxides, hydrogen and/or other elements present. On the contrary, higher values could cause a new decomposition of oxygen from the already oxidized elements, following the temperature rise due to the additional oxidation reaction.

For creation of the additional oxidation, a post-oxidation device 50 is provided which comprises a post-oxidation chamber 51, preferably insulated from the surrounding atmosphere, operatively interposed between the first and second heat exchangers 39, 40. The gaseous products from the first exchanger 39 flow into the post-oxidation chamber 51 and comes into contact with the oxidized metal element that, in a preferential solution, is made of copper material in that this element appears to be the one that best lends itself to give up oxygen at the above temperatures.

More particularly, the oxidized metal element is preferably formed of at least one endless ribbon 52 extending about a plurality of intermediate elements 53 consisting of rollers for example, according to a predetermined movement path having a first stretch 52a extending in the post-oxidation chamber 51 in such a way that the ribbon surfaces are efficiently slightly touched by the gaseous products.

The movement path along which ribbon 52 extends further has a second stretch 52a extending within a re-oxidation chamber 54 formed close to the post-oxidation chamber 51 and preferably insulated from the surrounding atmosphere as well. Secondary feeding means 55 converge at the re-oxidation chamber 54, said means being arranged to admit oxygen at a molar concentration greater than 90% to the re-oxidation chamber. The secondary feeding means 55 may for example comprise a flow-rate adjusting solenoid valve 55a communication with the molecular sieve 22 and managed by said electronic control unit to conveniently adjust the oxygen flow rate inside the re-oxidation chamber 54, based on data supplied by heat and/or pressure detecting probes 56 disposed in the post-oxidation chamber 51.

During operation, the endless ribbon 52 is moved along the movement path by at least one motor (not shown) setting one or more intermediate rollers 53 in rotation, or by equivalent transferring means, so that each area of the longitudinal extension of the ribbon is caused to alternately enter the post-oxidation chamber 51 and re-oxidation chamber 54, passing through connecting slits 57 suitably arranged between the chambers themselves. The previously surface-oxidized ribbon area, entering the post-oxidation chamber 51 is slightly touched by the gaseous products from the first heat exchanger 39, causing oxidation of carbon monoxide and hydrogen according to the direct oxydation reaction

2CuO + CO + H₂ = 2Cu + CO₂ + H₂O.

At the end of the first stretch 52a of the movement path, the ribbon 52 passes through the connecting slit 57 into the re-oxidation chamber 54 fed with oxygen. Under this situation, the copper material forming or coating the ribbon 52 is re-oxidized by the reverse reduction reaction

2Cu + O₂ = 2CuO,

so that it can again feed the additional oxidation reaction in the post-oxidation chamber 51.

Preferably, at least part of the oxygen introduced into the re-oxidation chamber 54 is transferred to the post-oxidation chamber 51 through the connecting slits 57, so that it helps with the additional oxidation reaction.

Heat generated from the additional oxidation reaction and from the ribbon re-oxidation in chamber 51, is recovered to advantage in the second heat-exchanger 40, where the gaseous products reach a temperature of about 700°C.

The present invention attains the intended purposes and achieves important advantages.

First of all, the high concentration of the gaseous combustive material (oxygen) under high pressure in the oxidation chamber enables the oxidation reaction velocity to be increased by more than six thousand times as compared with the normal combustion in the atmospheric air, so that any substances or elements can be oxidized, even if they are incombustible such as amianthus for example.

The absence of atmospheric nitrogen and any air excess or other combustive material within the oxidation chamber 2 enables the process enthalpy for the temperature rise to be fully utilized, without the occurrence of losses of thermal energy that, in traditional processes are absorbed by the inert nitrogen (in the order of 4/5) and air excess. This enables the achievement of very high temperatures in the oxidation chamber, and a high yield in generating electric energy.

Due to the high temperatures developed, the almost complete vaporization and pyrolysis of all elements forming the treated material, irrespective of the type of said material, is achieved. The method and plant in reference therefore lead to obtaining low amounts of useless ashes mainly composed of refractory oxides, neither toxic nor noxious.

It should be noted that the amount of residual ashes can be reduced to values lower than 1% of the mass of original material introduced into the oxidation chamber, whereas normal incineration processes usualy produce 30-40% of residual acid slags that must be sent to dumps for special waste products, after appropriate neutralization.

Injection of water into the oxidation chamber enables excessive temperature rises to be avoided, without impairing the thermal yield of the process. The decomposition heat absorbed by water is in fact recovered in the post-oxidation chamber following the recombination of hydrogen with oxygen, and therefore conveniently utilized in the second heat exchanger 40 for producing steam to be fed to the second turbine 48.

Due to the high pyrolysis rate of the compounds in the oxidation chamber, and to the use of the post-oxidizing device, practically the complete absence of noxious substances is achieved in the gaseous effluents discharged to the atmosphere. In particular nitrogen oxide and dioxide are eliminated, as well as polychlorinated components (dioxins and furans), cyanides, sulphur dioxides, and dusts.

The high thermal yield of the process enables the production of electric energy to be obtained in a very economical and ecological manner, even when the used fuel is formed of waste materials such as organic or inorganic town trash or industrial waste, no matter whether they are of an incombustible or weakly combustible type, such as amianthus.

These qualities validly help in solving all problems connected with disposal of waste material, offering the possibility of greatly reducing the necessity to resort to dumps.

The invention can be also used for the purpose of reclaiming presently existing dumps, reaching a great economical and ecological advantage, and it can also be utilized as a valid alternative solution for producing electric energy in a much safer and more ecological manner than the present systems based on nuclear fission or combustion of methane, petroleum or pit coal always involving the production of polluting and/or radioactive residual products.

It should be also noted that the plant lends itself to be advantageously adapted also for treatment of substances in a liquid form or, by adopting appropriate expedients, in a gaseous form, and also to be used for purifying fumes from industrial combustion of different nature.

## Claims

1. A method of disposal of waste materials comprising the steps of:
- introducing the material to be disposed of into an oxidation chamber (2) supplied with oxygen at a molar concentration greater than 90% and a pressure included between 3 MPa and 5 MPa, so that the compounds and elements contained in the treated material are oxidized and also subjected to pyrolysis and sublimated by effect of heat produced by the oxidation reaction;
- cooling the gaseous products resulting from sublimation of the components subjected to pyrolysis and the oxides produced in the oxidation reaction;
- discharging the residual gaseous products to the atmosphere after cooling,
characterized in that the residual gaseous products after a first cooling step, before their being discharged to the atmosphere, are submitted to an additional oxidation step making them react with at least one oxidized metallic element (52).

2. A method according to claim 1, wherein admission of water to the oxidation chamber (2) is also carried out, so that temperature in the oxidation chamber (2) is contained within a predetermined limit by effect of the decomposition heat absorbed by water.

3. A method according to claim 2, wherein admission of oxygen is carried out in a stoichiometric amount with respect to the material introduced into the oxidation chamber (2), said stoichiometric amount being reduced by the oxygen amount carried by the water admitted to the oxidation chamber (2).

4. A method according to claim 1, wherein oxygen is pre-heated by a step of heat exchange with the oxidation chamber (2) walls before being introduced into said oxidation chamber.

5. A method according to claim 1, wherein the additional oxidation step takes place at an average temperature included between 500°C and 650°C:

6. A method according to claim 1, wherein said metallic element (52) is substantially formed of copper material.

7. A method according to claim 1, wherein the metallic element (52) used in the additional oxidation step is submitted to a re-oxidation step before being utilized in the additional oxidation step again.

8. A method according to claim 7, wherein the re-oxidation step is carried out in a re-oxidation chamber (54) fed with oxygen at a molar concentration greater than 90%.

9. A method according to claim 8, wherein at least part of the oxygen fed to the re-oxidation chamber (54) is subsequently mixed with the gaseous products subjected to the additional oxidation step.

10. A method according to claim 1, wherein cooling of the gaseous products contemplates an expansion step of said gaseous products, during which a first fraction of substances to be condensed at a temperature higher than 1000°C is collected, followed by said first cooling step, during which at least one second fraction of substances to be condensed at temperatures included between 400°C and 1000°C is collected, and by a second cooling step, subsequent to the additional oxidation step, during which a third fraction of substances to be condensed at temperatures included between 600°C and 150°C is collected.

11. A method according to claim 10, wherein said cooling further comprises, subsequent to the second cooling step, a condensing step in which the gaseous products are brought to a temperature lower than 100°C to cause condensation of the water present therein, at least part of the condensed water being sent to the oxidation chamber (2).

12. A method according to claim 10, wherein between the expansion step and first cooling step, the gaseous products are subjected to an enthalpy-exploitation step through operation of a first turbine (44).

13. A method according to claim 1, wherein heat substracted from the gaseous products during cooling of same is utilized to feed a steam generator (47) interlocked to a second turbine (48).

14. A plant for disposal of waste materials, comprising:
- an oxidation chamber (2) which is substantially closed to the external environment;
- loading means (3) associated with the oxidation chamber (2) to introduce the material to be disposed of thereinto;
- primary feeding means (18) to send oxygen of a molar concentration greater than 90% and a pressure included between 3 MPa and 5 MPa to the oxidation chamber (2), so that the compounds of the material introduced into the oxidation chamber (2) are oxidized and also submitted to pyrolysis and sublimated by effect of heat produced by the oxidation reaction;
- cooling means (32, 39, 40, 41) operating downstream of the oxidation chamber (2) to cool the gaseous products resulting from sublimation of the components subjected to pyrolysis and the oxides produced in the oxidation reaction;
- exhaust means (42) to discharge the residual gaseous products to the atmosphere after cooling, characterized in that it further comprises at least one post-oxidation chamber (51) containing an oxidized metallic element (52) the surfaces of which are slightly touched by said gaseous products in order to cause an additional oxidation of the gaseous products themselves.

15. A plant according to claim 14, further comprising water supply means (28) for a controlled admission of water to the oxidation chamber (2), so that temperature in the last mentioned chamber is kept within limits, due to the decomposition heat absorbed by water.

16. A plant according to claim 14, wherein formed in the oxidation chamber (2) walls is at least one heat-exchange hollow space or gap (25a, 25b) passed through by the oxygen fed through said primary feeding means (18).

17. A plant according to claim 16, wherein said oxidation chamber (2) comprises at least two tubular elements (19, 26) coaxially fitted into each other, between which at least a heat exchange gap (25a, 25b) is defined which communicates with an inner cavity of the oxidation chamber (2).

18. A plant according to claim 14, wherein said cooling means (32, 39) is arranged to cool the gaseous products to a temperature included between 400°C and 600°C before said products reach the post-oxidation chamber (51).

19. A plant according to claim 14, wherein the oxidized metallic element (52) disposed in the post-oxidation chamber (51) is essentially made of copper material.

20. A plant according to claim 14, further comprising:
- at least one re-oxidation chamber (54) disposed adjacent to the post-oxidation chamber (51);
- transferring elements (53) operating on said metallic element (52) to alternately move it from the post-oxidation chamber (51) to the re-oxidation chamber (54) and vice versa;
- secondary feeding means (55) communicating with the re-oxidation chamber (54) to admit oxygen at a molar concentration greater than 90% thereto.

21. A plant according to claim 20, wherein said metallic element comprises an endless ribbon-like element (52), said transferring means comprising a plurality of intermediate elements (53) between which the ribbon extends following a given movement path having a first and a second stretch (52a, 52b) disposed in the post-oxidation chamber (51) and re-oxidation chamber (54), respectively.

22. A plant according to claim 20, wherein connecting slits are formed between the re-oxidation chamber (54) and post-oxidation chamber (51) to transfer at least part of the oxygen fed to the re-oxidation chamber (54), into the post-oxidation chamber (51).

23. A plant according to claim 14, wherein said loading means (3) comprises:
- a valve body (7) operatively connected to one end of the oxidation chamber (2) and selectively movable between a closing position in which it has a loading opening (13a) in alignment with an access opening (12) to the oxidation chamber, ad an opening position in which said loading opening (13a) is turned externally of said oxidation chamber (2), whereas said access opening (12) is closed by a shielding portion (17) carried by the valve body itself;
- a closure member (15) slidably engaged in the valve body (7) and selectively movable between a sealing closed position in which it operates in the oxidation chamber (2) through said access opening (12) and a loading position in which it is disposed backwardly of said access opening (12) towards the inside of the valve body (7), defined between said closing and loading positions there is an intermediate halt position in which said closure member (15) is disposed substantially flush with the access opening (12).

24. A plant according to claim 23, wherein said valve body (7) is shiftable between the closing and opening positions by angular rotation about a predetermined pivot axis (Y), said loading opening (13a) and access opening (12) being formed in a sealing surface (13) and a locating surface (10) of circular profile respectively, which are integral with the valve body (7) and the oxidation chamber (2), respectively.

25. A plant according to claim 23, wherein said closure member (15) is slidably guided in a loading pipe (14) containing at least one fluid-operated actuator (16) for movement of the closure member itself.

26. A plant according to claim 14, wherein said cooling means comprises at least one expansion chamber (32) disposed consecutively to the oxidation chamber (2) to cause expansion of the gaseous products from the oxidation chamber, control valve means (33) being arranged between the oxidation chamber (2) and expansion chamber (32) to adjust the flow rate of the gaseous products to said expansion chamber.

27. A plant according to claim 26, wherein said control valve means (33) comprises a second valve body (34) having a connecting duct (35) bringing the oxidation chamber (2) into fluid communication with the expansion chamber (32), and at least one restricting member (36) to be selectively positioned in the connecting duct (35) upon command of an actuator (36a) to adjust the flow rate of the gaseous products from the oxidation chamber (2) to the expansion chamber (32).

28. A plant according to claim 26, wherein said cooling means further comprises a first heat exchanger (39) operating upstream of the post-oxidation chamber (51) to cool the gaseous products to a temperature included between 400°C and 600°C and a second heat exchanger (40) operating downstream of said post-oxidation chamber (51) to cool the gaseous products to a temperature of about 150°C.

29. A plant according to claim 28, further comprising at least one turbine (44) operatively located between the expansion chamber (32) and said first-heat exchanger (39) to be operated by the gaseous products from the expansion chamber (32).

30. A plant according to claim 28, wherein said cooling means further comprises at least one condensation exchanger (41) operatively interposed between the post-oxidation chamber (51) and the exhaust means (42) to cool the gaseous products to a temperature lower than 100°C for causing condensing of the water present in said gaseous products, water supply means (28) being operatively connected to the condensation exchanger (41) to admit at least part of the water condensed in the condensation exchanger, into the oxidation chamber (2).

31. A plant according to claim 28, wherein said first and second heat exchangers (39, 40) are connected to a feeding circuit (46) of a steam generator (47) supplying with steam at least one second turbine (48) connected to an alternator (49) for generation of electric energy.
